# EUROPEAN PATENT SPECIFICATION

(11) **EP 1 585 237 B1**
(45) Date of publication and mention of the grant of the patent: **29.11.2006**
(21) Application number: 04290973.9
(22) Date of filing: 08.04.2004
(51) Int. Cl.: H04B 10/18, H04B 10/155, G02B 6/34

(54) **Method of transmitting digital signals over an optical transmission system**
Verfahren zur Übertragung von digitalen Signalen über ein optisches Übetragungssystem
Procédé de transmission de signaux numériques dans un système de transmission optique

(43) Date of publication of application: 12.10.2005
(73) Proprietor: ALCATEL, 75008 Paris (FR)
(72) Inventor: Charlet, Gabriel, 91190 Villiers-le-Bacle (FR); Pecci, Pascal, 91380 Chilly-Mazarin (FR); Lanne, Stéphanie, 75014 Paris (FR)
(74) Representative: Rausch, Gabriele

(56) References cited:
- EP-A- 1 202 476
- EP-A- 1 271 808
- EP-A- 1 298 819
- US-A1- 2003 007 231
- US-A1- 2003 175 036
- US-A1- 2003 210 912

## Description

The invention relates to a method of transmitting digital signals over an optical transmission system.

US 5,920,416 discloses a method of transmitting digital signals over an optical transmission system using phase modulation. To compensate the chromatic disperson produced by a fiber, a phase-shift is applied to the optical signal within each time cell in which the respective binary digit is low and within each time cell that precedes or follows a time cell in which the binary digit is high. This method is known as phase-shaped binary transmission (PSBT) and falls into the category of duobinary non-return-to-zero modulation formats. Another PSBT system is known from US 2003/0175036.

In US 5,920,416, the phase-shift is generated by an electrical control circuit and an optical phase modulator. The electrical control circuit requires a low-pass filter, e.g. a Bessel filter. The phase modulator may comprise a Mach Zehnder type interferometer.

It is an object of the present invention to provide a method of transmitting digital signals over an optical transmission system using the phase-shaped binary transmission format of US 5,920,416 and requiring less components compared to the prior art.

The invention solves this object by a method according to claim 1, by an optical transmitter according to claim 3 and by an optical transmission system according to claim 4.

The invention first generates a signal according to the differential phased shift keying (DPSK) format. Then, this DPSK signal is forwarded to an optical delay filter. And then, the invention uses an output signal of the optical delay filter as a signal according to the phase shaped binary transmission (PSBT) format.

Compared to the prior art, the invention does not require an electrical low-pass filter or the like. As a result, the invention provides the advantage that the PSBT signal is generated with less components.

In an advantageous embodiment of the invention, the optical delay filter is a Mach Zehnder filter wherein the PSBT signal is provided at a constructive port of the Mach Zehnder filter. Thus, a very effective solution is provided for generating the PSBT signal.

In another advantageous embodiment of the invention, the optical delay filter has a time delay xT, with x being a value between 0,5 and 1,0 and T being the time duration of a time cell of a single binary digit. In particular, in connection with a bit rate of 43,06 GBit/sec, the optical delay filter has a time delay of 0,86T.

Further features, applications and advantages of the invention will become apparent from the following description of exemplary embodiments of the invention which are shown in the drawings. There, all described and shown features themselves or in any combination represent the subject matter of the invention, independently of their wording in the description or their representation in the drawings and independently of their combination in the claims or the dependencies of the claims.

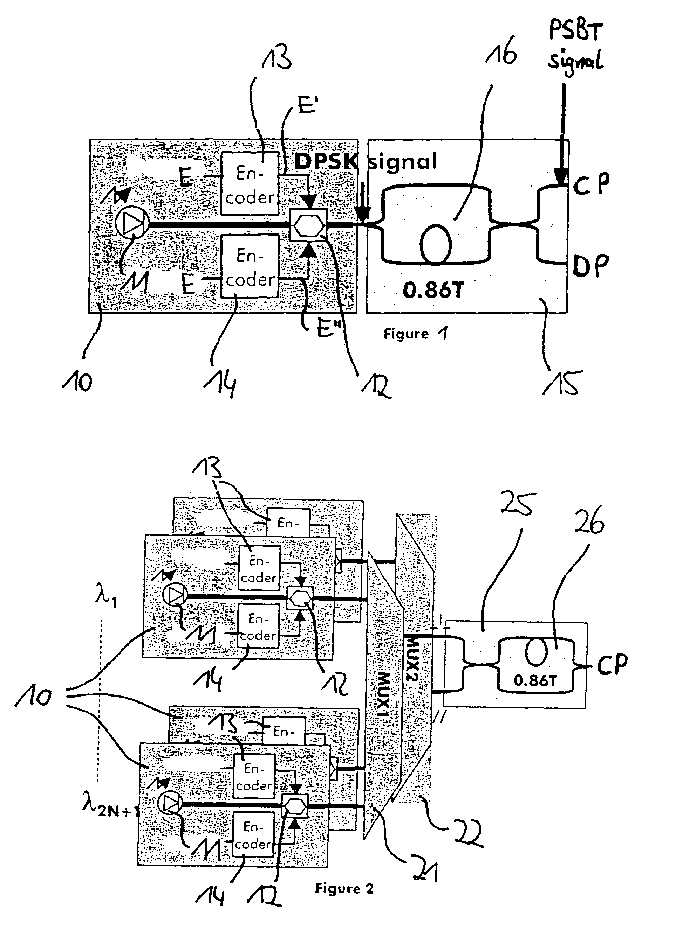

Figure 1 shows a schematic block diagram of a first embodiment of a method of transmitting digital signals over an optical transmission system according to the invention, and figure 2 shows a schematic block diagram of a second embodiment of a method of transmitting digital signals over an optical transmission system according to the invention.

In figure 1, a signal according to the known, so-called differential phased shift keying (DPSK) format is generated by a block 10. The block 10 is followed by a block 15. Both blocks 10, 15 may be part of an optical transmitter or an optical transmission system for transmitting digital signals.

The block 10 comprises a light emitting source 11 for generating an optical signal, and an optical modulator 12 for receiving and influencing the optical signal. Two electrical encoders 13, 14 are provided which receive a binary input signal E with a given bit rate, e.g 43,06 GBit/sec, and which influence the optical modulator 12 with their output signals E', E''.

The optical modulator 12 outputs an optical signal depending on the signals E', E" received from the two encoders 13, 14. In order to generate a signal in the differential phased shift keying format, the two encoders 13, 14 comprise the required algorithms. In figure 1, the two encoders 13, 14 work according to a so-called push-pull method. It is mentioned that the two encoders 13, 14 may be replaced by a single encoder comprising corresponding algorithms.

At the output of the optical modulator 12, a signal according to the differential phased shift keying format is present, i.e. a DPSK signal.

The block 15 comprises a passive optical delay filter 16, in particular a Mach Zehnder filter. The optical delay filter 16 receives the output signal of the optical modulator 12. The two channels of the optical delay filter 16 have a given optical time delay xT, with x being a value between 0,5 and 1,0 and T being the time duration of a time cell of a single binary digit.

With e.g. the above-mentioned given bit rate of 43,06 GBit/sec and a grid value of 50 GHz according to the ITU standard (ITU = international telecommunication union), the value x is selected to be 0,86, i.e. the time delay between the two channels of the optical delay filter 16 is 0,86T.

The optical delay filter 16 provides two output ports, a constructive port CP and a destructive port DP. At the constructive port CP of the optical delay filter 16, a signal according to the phase-shaped binary transmission format of US 5,920,416 is present, i.e. a PSBT signal. At the destructive port, a duobinary return-to-zero signal is generated.

The PSBT signal of the constructive port CP of the optical delay filter 16 has proved to provide a very good resistance with regard to chromatic dispersion produced by a fiber. The method of generating the afore-mentioned PBST signal has proved to be very effective, in particular it does not require an electrical filter within the encoders 13, 14.

In figure 2, a signal according to the differential phased shift keying (DPSK) format is generated several times for different wavelengths λ₁ to λ_{2N+1} of the light emitting source 11. For that purpose, an equal number of identical blocks 10 is provided. With regard to these blocks 10, reference is made to figure 1 and the above description.

The output signals of the number of blocks 10, i.e. the DPSK signals corresponding to the different wavelengths λ₁ to λ_{2N+1}, are multiplexed by two multiplexers 21, 22 relating to the two polarizations of the optical signals. The output signals of these two multiplexers 21, 22 are forwarded to a block 25 which comprises a passive optical delay filter 26, in particular a Mach Zehnder filter.

The optical delay filter 26 of figure 2 is similar to the optical delay filter 16 of figure 1 with the only difference that the optical delay filter 26 of figure 2 receives not only one, but two DPSK signals, i.e. the two output signals of the two multiplexers 21, 22.

At the constructive port CP of the optical delay filter 26, a signal according to the phase-shaped binary transmission format of US 5,920,416 is present, i.e. a PSBT signal. The method of generating the afore-mentioned PBST signal for different wavelengths λ₁ to λ_{2N+1} of the light emitting source has proved to be very effective, in particular it only requires a single optical delay filter.

## Claims

1. A method of transmitting digital signals over an optical transmission system comprising the following steps: generating a signal according to the differential phase shift keying DPSK format, forwarding the DPSK signal to an optical delay filter (16, 26) and thus generating a signal according to the phase shaped binary transmission (PSBT) format at an output of the optical delay filter (16, 26).

2. The method of claim 1 comprising the following further steps: forwarding a signal of a light emitting source (11) to an optical modulator (12), providing a binary input signal (E) to at least one encoder (13, 14), influencing the optical modulator (12) depending on the input signal (E), and thus generating the signal according to the differential phased shift keying (DPSK) format at an output of the optical modulator (12).

3. An optical transmitter for an optical transmission system for transmitting digital signals comprising: generating means adapted to generate a signal according to the differential phased shift keying DPSK format, an optical delay filter (16, 26) (16, 26) receive the DPSK signal and to generate an output signal according to the phase shaped binary transmission PSBT format.

4. An optical transmission system for transmitting digital signals comprising an optical transmitter according to claim 3.

5. The transmitter of claim 3 or the transmission system of claim 4 wherein the optical delay filter (16, 26) has a time delay xT, with x being a value between 0,5 and 1,0 and T being the time duration of a time cell of a single binary digit.

6. The transmitter of claim 3 or the transmission system of claim 4 wherein the optical delay filter (16, 26) has a time delay of 0,86T, with T being the time duration of a time cell of a single binary digit.

7. The transmitter of claim 3 or the transmission system of claim 4 wherein the PSBT signal is provided at a constructive port of the optical delay filter (16, 26).

8. The transmitter of claim 3 or the transmission system of claim 4 wherein the optical delay filter (16, 26) is a Mach Zehnder filter.

9. The transmitter of claim 3 or the transmission system of claim 4 wherein the generating means comprises: a light emitting source (11) adapted to generate an optical signal, an optical modulator (12) adapted to receive the optical signal and to generate an output signal according to the differential phased shift keying (DPSK) format, and at least one encoder (13, 14) adapted to receive a binary input signal (E) and to influence the optical modulator (12).

## Patentansprüche

1. Ein Verfahren zur Übertragung von digitalen Signalen über ein optisches Übertragungssystem, umfassend die folgenden Schritte: Erzeugen eines Signals gemäß dem Phasendifferenzmodulationsformat (DPSK-Format), Weiterleiten des DPSK-Signals an ein optisches Verzögerungsfilter (16, 26) und folglich Erzeugen eines Signals gemäß dem Binärübertragungsformat mit geglättetem Phasenverlauf (PSBT-Format) an einem Ausgang des optischen Verzögerungsfilters (16, 26).

2. Das Verfahren nach Anspruch 1 umfaßt außerdem die Schritte: Weiterleiten eines Signals einer lichtemittierenden Quelle (11) an einen optischen Modulator (12), Bereitstellen eines binären Eingangssignals (E) an mindestens einen Codierer (13, 14), Beeinflussen des optischen Modulators (12) in Abhängigkeit von dem Eingangssignal (E) und folglich Erzeugen des Signals gemäß dem Phasendifferenzmodulationsformat (DPSK-Format) an einem Ausgang des optischen Modulators (12).

3. Ein optischer Sender für ein optisches Übertragungssystem zum Senden von digitalen Signalen, umfassend: Erzeugungseinrichtungen, die angepaßt sind, um ein Signal gemäß dem Phasendifferenzmodulationsformat (DPSK-Format) zu erzeugen, ein optisches Verzögerungsfilter (16, 26), das angepaßt ist, um das DPSK-Signal zu empfangen und um ein Ausgangssignal gemäß dem Binärübertragungsformat mit geglättetem Phasenverlauf (PSBT-Format) zu erzeugen.

4. Ein optisches Übertragungssystem zum Senden von digitalen Signalen, das einen optischen Sender nach Anspruch 3 umfaßt.

5. Der Sender nach Anspruch 3 oder das Übertragungssystem nach Anspruch 4, in welchem das optische Verzögerungsfilter (16, 26) eine Zeitverzögerung xT aufweist, wobei x ein Wert zwischen 0,5 und 1,0 ist und T die Zeitdauer einer Zeitzelle einer einzelnen Binärziffer ist.

6. Der Sender nach Anspruch 3 oder das Übertragungssystem nach Anspruch 4, in welchem das optische Verzögerungsfilter (16, 26) eine Zeitverzögerung von 0,86T aufweist, wobei T die Zeitdauer einer Zeitzelle einer einzelnen Binärziffer ist.

7. Der Sender nach Anspruch 3 oder das Übertragungssystem nach Anspruch 4, in welchem das PSBT-Signal an einem konstruktiven Port des optischen Verzögerungsfilters (16, 26) bereitgestellt wird.

8. Der Sender nach Anspruch 3 oder das Übertragungssystem nach Anspruch 4, in welchem das optische Verzögerungsfilter (16, 26) ein mach-Zehnder-Filter ist.

9. Der Sender nach Anspruch 3 oder das Übertragungssystem nach Anspruch 4, in welchem die Erzeugungseinrichtungen umfassen: eine lichtemittierende Quelle (11), die angepaßt ist, um ein optisches Signal zu erzeugen, einen optischen Modulator (12), der angepaßt ist, um das optische Signal zu empfangen und um ein Ausgangssignal gemäß dem Phasendifferenzmodulationsformat (DPSK-Format) zu erzeugen, und mindestens einen Codierer (13, 14), der angepaßt ist, um ein binäres Eingangssignal (E) zu empfangen und um den optischen Modulator (12) zu beeinflussen.

## Revendications

1. Procédé de transmission de signaux numériques sur un système de transmission optique comprenant les étapes suivantes : générer un signal selon le format de modulation par déplacement de phase à détection différentielle (DPSK), transférer le signal DPSK à un filtre à retard optique (16, 26) et donc générer un signal selon le format de transmission binaire à phase modelée (PSBT) au niveau d'une sortie du filtre à retard optique (16, 26).

2. Procédé selon la revendication 1 comprenant les étapes supplémentaires suivantes : transférer un signal d'une source électroluminescente (11) à un modulateur optique (12), fournir un signal d'entrée binaire (E) à au moins un codeur (13, 14), influençant le modulateur optique (12) selon le signal d'entrée (E), et donc générer le signal selon le format de modulation par déplacement de phase à détection différentielle (DPSK) au niveau d'une sortie du modulateur optique (12).

3. Emetteur optique pour un système de transmission optique afin de transmettre des signaux numériques comprenant : des moyens de génération aptes à générer un signal selon le format de modulation par déplacement de phase à détection différentielle (DPSK), un filtre à retard optique (16, 26) apte à recevoir le signal DPSK et générer un signal de sortie selon le format de transmission binaire à phase modelée (PSBT).

4. Système de transmission optique pour transmettre des signaux numériques comprenant un émetteur optique selon la revendication 3.

5. Emetteur selon la revendication 3 ou système de transmission selon la revendication 4 dans lequel le filtre à retard optique (16, 26) a une temporisation xT, avec x étant une valeur entre 0,5 et 1,0 et T étant la durée d'une cellule temporelle d'un chiffre binaire unique.

6. Emetteur selon la revendication 3 ou système de transmission selon la revendication 4 dans lequel le filtre à retard optique (16, 26) a une temporisation de 0,86T, avec T étant la durée d'une cellule temporelle d'un chiffre binaire unique.

7. Emetteur selon la revendication 3 ou système de transmission selon la revendication 4 dans lequel le signal PBST est fourni au niveau d'un port constructif du filtre à retard optique (16, 26).

8. Emetteur selon la revendication 3 ou système de transmission selon la revendication 4 dans lequel le filtre à retard optique (16, 26) est un filtre de Mach Zehnder.

9. Emetteur selon la revendication 3 ou système de transmission selon la revendication 4 dans lequel les moyens de génération comprennent : une source électroluminescente (11) apte à générer un signal optique, un modulateur optique (12) apte à recevoir le signal optique et générer un signal de sortie selon le format de modulation par déplacement de phase à détection différentielle (DPSK), et au moins un codeur (13, 14) apte à recevoir un signal d'entrée binaire (E) et influencer le modulateur optique (12).
